# EUROPEAN PATENT APPLICATION

(11) **EP 4 806 957 A1**
(43) Date of publication of application: **16.09.2026**
(21) Application number: 24888639.2
(22) Date of filing: 01.11.2024
(51) Int. Cl.: C09C 3/10, C09D 11/00, C09D 17/00, C09D 201/00

(54) **EFFECT PIGMENT PREPARATION, THERMOPLASTIC RESIN COMPOSITION CONTAINING EFFECT PIGMENT PREPARATION, AND METHOD FOR PRODUCING PAINT OR INK CONTAINING EFFECT PIGMENT PREPARATION**

(30) Priority: 08.11.2023 JP 2023190791
(71) Applicant: Toyo Aluminium Kabushiki Kaisha, Osaka-shi, Osaka 541-0056 (JP)
(72) Inventor: SATO, Masami, Osaka-shi, Osaka 541-0056 (JP)
(74) Representative: Kador & Partner Part mbB
(86) International application number: PCT/JP2024/039018
(87) International publication number: WO 2025/100342

(57) **Abstract**

Provided are an effect pigment preparation which does not need heating upon mixing materials and has compatibility with thermoplastic resin, a thermoplastic resin composition containing the effect pigment preparation, and a method for manufacturing paint or ink containing the effect pigment preparation. According to the present invention, provided are the effect pigment preparation, the thermoplastic resin composition containing the effect pigment preparation, and the method for manufacturing the paint or ink containing the effect pigment preparation, in the effect pigment preparation containing 99% by mass or more of a total of effect pigment and polyalphaolefin, the PAO is in a liquid form at 25°C, and based on the effect pigment preparation, the effect pigment is 75% by mass or more and 95% by mass or less, the PAO is 5% by mass or more and 25% by mass or less, and a volatile organic compound is 1% by mass or less.

## Description

### TECHNICAL FIELD

The present invention relates to an effect pigment preparation used for paint or ink for the purpose of imparting visual effects such as brightness and, in particular, relates to an effect pigment preparation which does not need heating upon mixing raw materials, has compatibility with thermoplastic resin, and can be easily kneaded to the thermoplastic resin, a thermoplastic resin composition containing the effect pigment preparation, and a method for manufacturing paint or ink including the effect pigment preparation.

### BACKGROUND ART

Conventionally, effect pigment has been used for the purpose of imparting visual effects such as brightness to surface coating. The effect pigment means all kinds of pigment, each of which generally has a lamellar structure and provides special decorative color effects to the surface coating. As the effect pigment, for example, cited are pure metal pigment such as aluminum, iron, or copper; interference pigment such as mica coated with a titanium dioxide, mica coated with an iron oxide, mica coated with mixed oxides, and aluminum coated with a metal oxide, and liquid crystal pigment.

In addition, in order to input the effect pigment to a thermoplastic resin composition, as an effect pigment preparation, solid wax is heated to a melting point or more, the effect pigment is inputted thereto and is kneaded, and thereafter, the kneaded resultant is molded into a pellet shape or a granular shape, and the molded resultants are commercially available.

For example, disclosed in Japanese Patent Application Laid-Open Publication No. 2010-121092 (Patent Literature 1) as an effect pigment preparation is a masterbatch which contains polyethylene wax and linear low-density polyethylene resin and is molded in a pellet shape. Besides this, for example, as in International Publication No. WO2015/169502 (Patent Literature 2), pellets obtained by mixing metal pigment and water-soluble resin such as polyvinylpyrrolidone and compressing the resultant are disclosed.

### CITATION LIST

### PATENT LITERATURE

Patent Literature 1: Japanese Patent Application Laid-Open Publication No. 2010-121092
Patent Literature 2: International Publication No. WO2015/169502

### SUMMARY OF THE INVENTION

### TECHNICAL PROBLEM

However, for obtaining the masterbatch described in Patent Literature 1, in order to melt the used wax and resin, it is required to conduct heating upon mixing and kneading. On the other hand, since the pellets described in Patent Literature 2 are manufactured by using the water-soluble resin in order to avoid heating, there may be a case in which compatibility with resin used as the thermoplastic resin composition is insufficient.

Therefore, in view of the above-described circumstances, the present invention has been made, and an object of the present invention is to provide an effect pigment preparation which does not require heating upon mixing raw materials, is advantageous in terms of energy, and has compatibility with thermoplastic resin.

### SOLUTION TO PROBLEM

In order to solve the above-described problems, the present inventors have devoted themselves to earnest research as to composition of an effect pigment preparation and the like. As a result, the present inventors found that by blending the effect pigment with polyalphaolefin which is in a liquid form at a specific temperature at a specific ratio, the above-described problems can be solved, thus reaching completion of the present invention.

In other words, according to the present invention, provided is an effect pigment preparation containing 99% by mass or more of a total of effect pigment and polyalphaolefin, and the polyalphaolefin is in a liquid form at 25°C, and based on the effect pigment preparation, the effect pigment is 75% by mass or more and 95% by mass or less, the polyalphaolefin is 5% by mass or more and 25% by mass or less, and a volatile organic compound is 1% by mass or less.

Since the effect pigment preparation of the present invention does not need heating upon mixing raw materials and has compatibility with thermoplastic resin, the effect pigment preparation can be easily kneaded into the thermoplastic resin. In addition, the effect pigment preparation of the present invention not only can be kneaded into a thermoplastic resin composition but also can exhibit extremely excellent dispersibility when used also in solvent-based paint.

In the present invention, it is preferable that a kinetic viscosity of the polyalphaolefin at 40°C is 4000 mm²/s or less.

In the present invention, it is preferable that the effect pigment is metal, a metal oxide, a metal hydroxide, or a mixture of any two or three of the metal, the metal oxide, and the metal hydroxide. In addition, it is preferable that the effect pigment is coated with resin, a metal oxide, a metal hydroxide, or a mixture of any two or three of the resin, the metal oxide, and the hydroxide.

Furthermore, it is preferable that a surface of the effect pigment has a chromatic color pigment layer. In addition, it is preferable that the chromatic color pigment layer contains resin, a metal oxide, a metal hydroxide, or a mixture of any two or three of the resin, the metal oxide, and the metal hydroxide.

Since the effect pigment preparation of the present invention does not need heating upon mixing raw materials and has compatibility with the thermoplastic resin, by blending the effect pigment preparation in the thermoplastic resin, the effect pigment preparation can also be used as a thermoplastic resin composition.

In addition, according to the present invention, a method for manufacturing paint or ink including the effect pigment preparation as described above is provided.

### ADVANTAGEOUS EFFECTS OF THE INVENTION

According to the present invention, provided are an effect pigment preparation which does not need heating upon mixing raw materials, has compatibility with thermoplastic resin, and can be easily kneaded into thermoplastic resin, a thermoplastic resin composition containing the effect pigment preparation, and a method for manufacturing paint or ink including the effect pigment preparation. In addition, the effect pigment preparation of the present invention can exhibit excellent effects that the effect pigment preparation not only can be kneaded into the thermoplastic resin composition but also is uniformly dispersed even when used in solvent-based paint.

### BRIEF DESCRIPTION OF THE DRAWINGS

FIG. 1 is a photograph of an effect pigment preparation (in a state of pellets) in Example 1.
FIG. 2 is a photograph of a mixture showing a state immediately after inputting thinner to the effect pigment preparation in Example 1 shown in FIG. 1.
FIG. 3 is a photograph of testing paint showing a state after agitating the mixture in Example 1 shown in FIG. 2.
FIG. 4 is a photograph of an effect pigment preparation (in a state of pellets) in Comparative Example 1.
FIG. 5 is a photograph of a mixture showing a state immediately after inputting thinner to the effect pigment preparation in Comparative Example 1 shown in FIG. 4.
FIG. 6 is a photograph of a mixture after agitating the mixture in Comparative Example 1 shown in FIG. 5.

### DESCRIPTION OF EMBODIMENTS

Hereinafter, an effect pigment preparation, a thermoplastic resin composition including an effect pigment preparation, and a method for manufacturing paint or ink including an effect pigment preparation, according to one embodiment, will be described in detail with reference to the accompanying drawings. Note that the present invention is not limited to the below-described embodiment and a variety of modifications can be made without departing from the technical idea of the present invention.

### <Effect Pigment Preparation>

An effect pigment preparation of the present invention includes effect pigment and polyalphaolefin (hereinafter, also referred to as "PAO") and normally has a solid form. A total amount of the effect pigment and the PAO is 99% by mass or more. In addition, although it is ideal that the effect pigment preparation includes no volatile organic compound, since the volatile organic compound may be inevitably included, it is preferable that 1% by mass or less of the volatile organic compound is included.

Although a shape of the effect pigment preparation is not particularly limited, for example, a shape of the effect pigment preparation can be a pellet shape, a granular shape, a tablet shape, a noodle shape, or the like.

### <Effect Pigment>

The effect pigment means all kinds of pigment which impart visual effects such as brightness. Although the effect pigment used in the present invention is not particularly limited and the heretofore known effect pigment can be used, pigment whose surface has brightness is preferable. It is preferable that a content of the effect pigment in the effect pigment preparation is 75% by mass or more and 95% by mass or less of the effect pigment preparation and it is more preferable that the content thereof is 80% by mass or more and 90% by mass or less thereof. If the content of the effect pigment is less than 75% by mass, since a content of components other than the effect pigment is relatively large, it is difficult to keep the shape thereof such as the pellet shape, and therefore, in addition, in a case in which the effect pigment is used in paint, a thermoplastic resin composition, or the like, a degree of freedom of designing the paint or the thermoplastic resin composition is substantially limited. On the other hand, if the content of the effect pigment exceeds 90% by mass, the PAO is short, thereby causing powder dust or making it impossible to maintain the shape of the effect pigment preparation

As the effect pigment having the brightness, for example, flakes of metal such as aluminum, titanium, copper, brass, and stainless steel and in addition thereto, natural mica, synthetic mica, alumina flakes, glass flakes, and the like are cited. In particular, since aluminum or an aluminum alloy is high in hiding power, the aluminum or the aluminum alloy can be preferably used in the present invention. In addition, the effect pigment may be water-resistant-treated by a phosphorus compound, a molybdenum compound, or the like or may be coated with resin, a metal oxide, or the like.

Although the shape of the effect pigment is not particularly limited, for example, it is preferable that the shape thereof is a flake shape, a scale-like shape, a disk shape, an elliptical disk shape, or the like.

Although a size of the effect pigment is not particularly limited, for example, particles whose D₅₀ in volumetric distribution by laser diffractometry is 1 µm to 200 µm can be preferably used.

### <Polyalphaolefin>

The PAO used in the present invention is in a liquid form at 25°C. Since the PAO is in the liquid form at 25°C, the PAO can be kneaded without heating upon mixing with the effect pigment.

It is preferable that a content of the PAO in the effect pigment preparation is 5% by mass or more and 25% by mass or less and it is more preferable that the content thereof is 10% by mass or more and 20% by mass or less. If the content of the PAO is less than 5% by mass, the effect pigment preparation cannot be solidified, and on the other hand, if the content thereof exceeds 25% by mass, it is likely that the effect pigment preparation is fluidized.

The PAO is a homopolymer or a copolymer polymerized mainly with alpha olefin, and a part of a main chain or a side chain may be replaced with other substituent or may be hydrotreated. As the alpha olefin, ethylene, propylene, 1-butene, 1-hexene, 1-octene, or longer chain one, and in addition thereto, those, whose carbon chain other than terminal double bonds has a branched structure or a cyclic structure, such as 3-methyl-1-butene and vinylcyclohexane, can also be used. Among them, alpha olefin whose carbon number is 4 or more and which is linear, such as 1-butene, 1-hexene, and 1-octene, is preferable. In addition, as a catalyst used for polymerization, the heretofore known catalyst such as a Ziegler catalyst and a metallocene catalyst can be optionally used.

It is preferable that a kinetic viscosity of the PAO at 40°C is 4000 mm²/s or less for the sake of handling and it is more preferable that the kinetic viscosity thereof is 3500 mm²/s or less.

As commercially available PAO having the above-mentioned viscosity, SpectraSyn (registered trademark) series manufactured by ExxonMobil Corporation and the like are cited. In addition, these kinds of PAO may be used alone or a plurality thereof may be used in combination. Note that the above-mentioned kinetic viscosity at 40°C can be measured by using a Cannon-Fenske viscometer.

### <Other Additives>

Besides the PAO, the effect pigment preparation of the present invention may include additives such as a pigment dispersant and a neutralizer appropriately as needed in a range in which effects of the present invention are not impaired.

### <Method for Manufacturing Effect Pigment Preparation>

The effect pigment preparation of the present invention is prepared by mixing the effect pigment, the PAO, other pigment and additives and the like at normal temperature as needed and thereby obtaining a mixture, by molding the obtained mixture, and thereafter, drying the resultant. Although the effect pigment is commercially available as paste with a solvent added, since the solvent is removed upon drying, the paste including the effect pigment may be mixed as it is.

Although a method for mixing the effect pigment and the PAO is not particularly limited, for example, the heretofore known method such as using of a kneader mixer can be appropriately used. Although a method for molding the mixture is not particularly limited, in accordance with a desired shape such as a tablet shape, a pellet shape, a granular shape, or a noodle shape, the heretofore known method such as extrusion molding and injection molding can be employed. Although drying is dependent on a kind or an amount of a solvent deriving from paste including the effect pigment and on a shape or a size of a pellet or the like, ordinarily, drying may be conducted under reduced pressure or under ordinary pressure at room temperature (approximately 23°C) to 200°C.

### <Thermoplastic Resin Composition>

In the present invention, as other embodiment, the effect pigment preparation of the present invention is added to thermoplastic resin and kneading is conducted, thereby allowing a thermoplastic resin composition to be obtained. In addition, by molding the thermoplastic resin composition, a molded body having desired brightness can be prepared.

Although thermoplastic resin used in the thermoplastic resin composition of the present invention is not particularly limited as long as the thermoplastic resin is the heretofore known thermoplastic resin, for example, at least one kind resin selected from polyethylene, ABS, polycarbonate, and the like can be used.

Although a blending quantity of the thermoplastic resin in the thermoplastic resin composition is not particularly limited, for example, in a case in which the thermoplastic resin composition is used to manufacture a molded body by employing injection molding or the like, it is preferable that the blending quantity of the effect pigment is 0.01 parts by mass or more and 30 parts by mass by less based on 100 parts by mass of the thermoplastic resin. If the blending quantity of the thermoplastic resin is less than 0.01 parts by mass, it is likely that coloring power is weak and desired design cannot be obtained. On the other hand, the blending quantity of the thermoplastic resin exceeds 30 parts by mass, mechanical strength of the molded body tends to be remarkably reduced.

In addition, although in the present invention, the effect pigment preparation itself can also be used as masterbatch (a solid additive for plastic), in a case in which the thermoplastic resin composition previously mixed with predetermined thermoplastic resin according to application is used as the masterbatch, it is preferable that a blending quantity of the effect pigment preparation is 20 parts by mass or more based on 100 parts by mass of the thermoplastic resin. If the blending quantity of the ffect pigment preparation is less than 20 parts by mass, it is likely that coloring power is weak and desired design cannot be obtained.

### <Ink or Paint>

In the present invention, as other embodiment, the effect pigment preparation of the present invention can be used for paint or ink. In this case, a composition or compositions other than the effect pigment preparation for the paint or the ink and a manufacturing method thereof are not particularly limited and the heretofore known material or materials and manufacturing method can be used.

### [EXAMPLES]

Hereinafter, although with reference to Examples, the present invention will be described in detail, the present invention is not limited thereto.

### <Preparation of Effect Pigment Preparation>

### [Example 1]

As effect pigment, 500 g of paste including aluminum flake pigment (trade name: "7680NS", a solid content of 65% by mass, a mineral spirit content of 35% by mass, an average particle diameter of 11 µm, manufactured by TOYO ALUMINIUM K.K.) and as PAO, 35.0 g of SpectraSyn (registered trademark) Elite 65 (600 mm²/s of a kinetic viscosity at 40°C, manufactured by Exxon Mobil Corporation) were added into a twin screw kneader mixer and were kneaded for 5 minutes. The obtained mixture was molded into a pellet shape by using an extrusion granulator (MULTI GRAN MG-55-2, manufactured by DALTON CORPORATION). The obtained molded material was moved into an inert oven (IPHH-201, manufactured by ESPEC INC.) heated at 120°C and was dried for 2 hours under a nitrogen atmosphere, thereby obtaining an effect pigment preparation in Example 1.

A content of the effect pigment included in the effect pigment preparation was 90.3% by mass. Note that a heating residue in the obtained effect pigment preparation was measured in accordance with JIS K 5906, resulting in 99.9% by mass. In other words, a residual solvent content in the effect pigment preparation was 0.1% by mass.

### [Example 2]

As effect pigment, 500 g of paste including aluminum flake pigment (trade name: "5620NS", a solid content of 71% by mass, a mineral spirit content of 29% by mass, an average particle diameter of 18 µm, manufactured by TOYO ALUMINIUM K.K.) and as PAO, 20.0 g of SpectraSyn (registered trademark) Elite 65 (600 mm²/s of a kinetic viscosity at 40°C, manufactured by Exxon Mobil Corporation) were added into a twin screw kneader mixer and were kneaded for 5 minutes. The obtained mixture was molded into a pellet shape by using an extrusion granulator (MULTI GRAN MG-55-2, manufactured by DALTON CORPORATION). The obtained molded material was moved into an inert oven (IPHH-201, manufactured by ESPEC INC.) heated at 120°C and was dried for 2 hours under a nitrogen atmosphere, thereby obtaining an effect pigment preparation in Example 2.

A content of the effect pigment included in the effect pigment preparation was 94.7% by mass. Note that a heating residue in the obtained effect pigment preparation was measured in accordance with JIS K 5906, resulting in 100.0% by mass. In other words, a residual solvent content in the effect pigment preparation was 0.0% by mass.

### [Example 3]

As effect pigment, 500 g of paste including coloring aluminum flake pigment (trade name: "EMR-D46BLA", a solid content of 55% by mass, a 2-propanol content of 45% by mass, an average particle diameter of 18 µm, manufactured by TOYO ALUMINIUM K.K.) and as PAO, 80.0 g of SpectraSyn (registered trademark) Elite 65 (600 mm²/s of a kinetic viscosity at 40°C, manufactured by Exxon Mobil Corporation) were added into a twin screw kneader mixer and were kneaded for 5 minutes. The obtained mixture was molded into a pellet shape by using an extrusion granulator (MULTI GRAN MG-55-2, manufactured by DALTON CORPORATION). The obtained molded material was moved into an inert oven (IPHH-201, manufactured by ESPEC INC.) heated at 120°C and was dried for 30 minutes under a nitrogen atmosphere, thereby obtaining an effect pigment preparation in Example 3.

A content of the effect pigment included in the effect pigment preparation was 77.5% by mass. Note that a heating residue in the obtained effect pigment preparation was measured in accordance with JIS K 5906, resulting in 100.0% by mass. In other words, a residual solvent content in the effect pigment preparation was 0.0% by mass.

### [Example 4]

As effect pigment, 500 g of paste including coloring aluminum flake pigment (trade name: "EMR-D46GRA", a solid content of 55% by mass, a 2-propanol content of 45% by mass, an average particle diameter of 18 µm, manufactured by TOYO ALUMINIUM K.K.) and as PAO, 60.0 g of SpectraSyn (registered trademark) Elite 65 (600 mm²/s of a kinetic viscosity at 40°C, manufactured by Exxon Mobil Corporation) were added into a twin screw kneader mixer and were kneaded for 5 minutes. The obtained mixture was molded into a pellet shape by using an extrusion granulator (MULTI GRAN MG-55-2, manufactured by DALTON CORPORATION). The obtained molded material was moved into an inert oven (IPHH-201, manufactured by ESPEC INC.) heated at 120°C and was dried for 30 minutes under a nitrogen atmosphere, thereby obtaining an effect pigment preparation in Example 4.

A content of the effect pigment included in the effect pigment preparation was 82.1% by mass. Note that a heating residue in the obtained effect pigment preparation was measured in accordance with JIS K 5906, resulting in 100.0% by mass. In other words, a residual solvent content in the effect pigment preparation was 0.0% by mass.

### [Example 5]

As effect pigment, 500 g of paste including silica-coated aluminum flake pigment (trade name: "EMR-D5660", a solid content of 50% by mass, a propylene glycol monomethyl ether content of 50% by mass, an average particle diameter of 10 µm, manufactured by TOYO ALUMINIUM K.K.) and as PAO, 40.0 g of SpectraSyn (registered trademark) Elite 65 (600 mm²/s of a kinetic viscosity at 40°C, manufactured by Exxon Mobil Corporation) were added into a twin screw kneader mixer and were kneaded for 5 minutes. The obtained mixture was molded into a pellet shape by using an extrusion granulator (MULTI GRAN MG-55-2, manufactured by DALTON CORPORATION). The obtained molded material was moved into an inert oven (IPHH-201, manufactured by ESPEC INC.) heated at 120°C and was dried for 1 hour under a nitrogen atmosphere, thereby obtaining an effect pigment preparation in Example 5.

A content of the effect pigment included in the effect pigment preparation was 86.2% by mass. Note that a heating residue in the obtained effect pigment preparation was measured in accordance with JIS K 5906, resulting in 100.0% by mass. In other words, a residual solvent content in the effect pigment preparation was 0.0% by mass.

### [Example 6]

As effect pigment, 500 g of paste including coloring aluminum flake pigment (trade name: "EMR-D5620", a solid content of 60% by mass, a propylene glycol monomethyl ether content of 40% by mass, an average particle diameter of 20 µm, manufactured by TOYO ALUMINIUM K.K.) and as PAO, 60.0 g of SpectraSyn (registered trademark) Elite 300 (3400 mm²/s of a kinetic viscosity at 40°C, manufactured by Exxon Mobil Corporation) were added into a twin screw kneader mixer and were kneaded for 5 minutes. The obtained mixture was molded into a pellet shape by using an extrusion granulator (MULTI GRAN MG-55-2, manufactured by DALTON CORPORATION). The obtained molded material was moved into an inert oven (IPHH-201, manufactured by ESPEC INC.) heated at 120°C and was dried for 30 minutes under a nitrogen atmosphere, thereby obtaining an effect pigment preparation in Example 6.

A content of the effect pigment included in the effect pigment preparation was 83.3% by mass. Note that a heating residue in the obtained effect pigment preparation was measured in accordance with JIS K 5906, resulting in 100.0% by mass. In other words, a residual solvent content in the effect pigment preparation was 0.0% by mass.

### [Example 7]

As effect pigment, 500 g of paste including resin-coated aluminum flake pigment (trade name: "BP-5660", a solid content of 50% by mass, a mineral spirit content of 50% by mass, an average particle diameter of 10 µm, manufactured by TOYO ALUMINIUM K.K.) and as PAO, 50.0 g of SpectraSyn (registered trademark) Elite 65 (600 mm²/s of a kinetic viscosity at 40°C, manufactured by Exxon Mobil Corporation) were added into a twin screw kneader mixer and were kneaded for 5 minutes. The obtained mixture was molded into a pellet shape by using an extrusion granulator (MULTI GRAN MG-55-2, manufactured by DALTON CORPORATION). The obtained molded material was moved into an inert oven (IPHH-201, manufactured by ESPEC INC.) heated at 120°C and was dried for 2 hours under a nitrogen atmosphere, thereby obtaining an effect pigment preparation in Example 7.

A content of the effect pigment included in the effect pigment preparation was 83.3% by mass. Note that a heating residue in the obtained effect pigment preparation was measured in accordance with JIS K 5906, resulting in 99.9% by mass. In other words, a residual solvent content in the effect pigment preparation was 0.1% by mass.

### [Comparative Example 1]

For comparison, based on Patent Literature 1, an effect pigment preparation was prepared under the following conditions. As effect pigment, 700 g of a paste including aluminum flake pigment (trade name: "5620NS", a solid content of 71% by mass, a mineral spirit content of 29% by mass, an average particle diameter of 18 µm, manufactured by TOYO ALUMINIUM K.K.), as PAO, 192g of polyethylene wax (trade name: "SANWAX 161-P", a melting point of 103°C, a melt viscosity of 4300 mPa·s, manufactured by Sanyo Chemical Industries, Ltd.), and 22 g of linear low-density polyethylene resin (trade name: "Evolue SP2510", manufactured by Prime Polymer Co., Ltd.) were inputted into a twin screw kneader mixer and were mixed and kneaded at a heating temperature of 160°C for one hour, and thereafter, deaeration was conducted, thereby preparing a mixture. Subsequently, the obtained mixture was pre-pulverized by a crusher or the like and an effect pigment preparation in Comparative Example 1 having a cylindrical pellet shape was obtained by a disc pelletizer.

A content of the effect pigment included in the effect pigment preparation was 69.9% by mass. Note that a heating residue in the obtained effect pigment preparation was measured in accordance with JIS K 5906, resulting in 99.7% by mass. In other words, a residual solvent content in the effect pigment preparation was 0.3% by mass

### [Comparative Example 2]

As effect pigment, 500 g of paste including silica-coated aluminum flake pigment (trade name: "EMR-D5660", a solid content of 50% by mass, a propylene glycol monomethyl ether content of 50% by mass, an average particle diameter of 10 µm, manufactured by TOYO ALUMINIUM K.K.) and as PAO, 8.0 g of SpectraSyn (registered trademark) Elite 65 (600 mm²/s of a kinetic viscosity at 40°C, manufactured by Exxon Mobil Corporation) were added into a twin screw kneader mixer and were kneaded for 5 minutes. The obtained mixture was molded into a pellet shape by using an extrusion granulator (MULTI GRAN MG-55-2, manufactured by DALTON CORPORATION). The obtained molded material was moved into an inert oven (IPHH-201, manufactured by ESPEC INC.) heated at 120°C and was dried for 5 hours under a nitrogen atmosphere, and then, the pellet shape state was unable to be kept and a powder state resulted, it was impossible to obtain an effect pigment preparation in Comparative Example 2, and the testing was discontinued.

### [Comparative Example 3]

As effect pigment, 500 g of paste including silica-coated aluminum flake pigment (trade name: "EMR-D5660", a solid content of 50% by mass, a propylene glycol monomethyl ether content of 50% by mass, an average particle diameter of 10 µm, manufactured by TOYO ALUMINIUM K.K.) and as PAO, 157.0 g of SpectraSyn (registered trademark) Elite 65 (600 mm²/s of a kinetic viscosity at 40°C, manufactured by Exxon Mobil Corporation) were added into a twin screw kneader mixer and were kneaded for 5 minutes. The obtained mixture was molded into a pellet shape by using an extrusion granulator (MULTI GRAN MG-55-2, manufactured by DALTON CORPORATION). The obtained molded material was moved into an inert oven (IPHH-201, manufactured by ESPEC INC.) heated at 120°C and was dried for 5 hours under a nitrogen atmosphere, and then, the pellets were mutually attached, the pellets were too soft, and the pellet shape state was unable to be kept, it was impossible to obtain an effect pigment preparation in Comparative Example 3, and the testing was discontinued.

### [Comparative Example 4]

As effect pigment, 500 g of paste including aluminum flake pigment (trade name: "EMR-D5660", a solid content of 50% by mass, a propylene glycol monomethyl ether content of 50% by mass, an average particle diameter of 10 µm, manufactured by TOYO ALUMINIUM K.K.) and since similarly, ethylene is also common with alpha olefin, as PAO, 62.5g of an ethylene-alpha olefin copolymer (trade name: "TAFMER (registered trademark) A", a melting point of 66°C, manufactured by Mitsui Chemicals, Inc.) were added into a twin screw kneader mixer and were kneaded for 5 minutes. The obtained mixture was molded into a pellet shape by using an extrusion granulator (MULTI GRAN MG-55-2, manufactured by DALTON CORPORATION). The obtained molded material was moved into an inert oven (IPHH-201, manufactured by ESPEC INC.) heated at 120°C and was dried under a nitrogen atmosphere for 5 hours, and then, a pellet shape state was unable to be kept and a powder state resulted, it was impossible to obtain an effect pigment preparation in Comparative Example 4, and the testing was discontinued.

The above-described results are shown in Table 1.

**[Table 1]**

| | Effect pigment | | | PAO | | | | Molding of pellet shaped effect pigment preparation enabled or not enabled. |
|---|---|---|---|---|---|---|---|---|
| | Trade name | Average particle diameter | Solid content blending quantity | Trade name | Liquefaction temperature 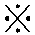 ¹⁾ | Viscosity 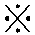 ²⁾ | Blending quantity | |
| | | (µm) | (g) | | (°C) | (mm²/s) | (g) | |
| Example 1 | 7680NS | 11 | 325 | SpectraSyn Elite^{™} 65 | - | 600 | 35 | Enabled |
| Example 2 | 5620NS | 18 | 355 | SpectraSyn Elite^{™} 65 | - | 600 | 20 | Enabled |
| Example 3 | EMR-D46BLA | 18 | 275 | SpectraSyn Elite^{™} 65 | - | 600 | 80 | Enabled |
| Example 4 | EMR-D46BLA | 18 | 275 | SpectraSyn Elite^{™} 65 | - | 600 | 60 | Enabled |
| Example 5 | EMR-D5660 | 10 | 250 | SpectraSyn Elite^{™} 65 | - | 600 | 40 | Enabled |
| Example 6 | EMR-D5620 | 20 | 300 | SpectraSyn Elite^{™} 300 | - | 3400 | 60 | Enabled |
| Example 7 | BP-5660 | 10 | 250 | SpectraSyn Elite^{™} 65 | - | 600 | 50 | Enabled |
| Comparative Example 1 | 5620NS | 18 | 497 | SANWAX 161-P | 103 | 4300 (mPa·s) | 192 | Enabled |
| Comparative Example 2 | EMR-D5660 | 10 | 250 | SpectraSyn Elite^{™} 65 | - | 600 | 8 | Not enabled Disintegrated into a powder state |
| Comparative Example 3 | EMR-D5660 | 10 | 250 | SpectraSyn Elite^{™} 65 | - | 600 | 157 | Not enabled Disintegrated due to softening |
| Comparative Example 4 | EMR-D5660 | 10 | 250 | TAFMER^{™} A | 66 | - | 62.5 | Not enabled Disintegrated into a powder state |

| | | | | | | | | |
|---|---|---|---|---|---|---|---|---|
| 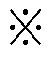 1) A melting point of solid wax in each of Comparative Examples 1 and 4 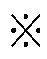 2) A kinetic viscosity at 40°C in each of Examples 1 to 7 and Comparative Examples 2 and 3 and a melt viscosity in each of Comparative Examples 1 and 4 | | | | | | | | |

### <Evaluation of Effect Pigment Preparation>

### [Evaluation Test 1]

Based on 100 parts by mass of transparent ABS resin (product name "CL-430" manufactured by Denka Company Limited), as a solid content, 1 parts by mass of the effect pigment preparation in each of Examples 1 to 6 and Comparative Example 1 which was able to be molded into a pellet shape was blended and was mixed and kneaded at 230°C, thereby obtaining a thermoplastic resin composition according to each of Examples 1 to 6 and Comparative Example 1. By using an injection molder " FE80S1 2ASE" (manufactured by NISSEI PLASTIC INDUSTRIAL CO., LTD.), the obtained thermoplastic resin composition was injection-molded to a plate mold (50 mm × 80 mm × 3 mm) under conditions of cylinder temperatures of a nozzle part at 230°C, a front part at 230°C, a middle part at 225°C, a rear part at 220°C, and a mold temperature at 60°C, thereby obtaining a molded body according to each of Examples 1 to 6 and Comparative Example 1. A finishing state of also the obtained molded body was visually checked and evaluated. Specifically, a case in which the molded body had no bumps and dips, scratches, or flaws such as cracks or no color unevenness in brightness or the like occurred (even dispersion of the effect pigment was confirmed) was evaluated as "Good" and a case in which the molded body had bumps and dips, scratches, or flaws such as cracks or color unevenness in brightness or the like occurred (flocculation of the effect pigment or uneven dispersion thereof was confirmed) was evaluated as "Bad".

### [Evaluation Test 2]

At room temperature (23°C), into a cup formed of PP (polypropylene), as a solid content, 10 g of the effect pigment preparation in each of Examples 1 to 6 and Comparative Example 1, which was able to be molded into the pellet shape, was measured and taken and 20 g of thinner (manufactured by Nippon Paint Co., Ltd., trade name: nax admira 500 standard thinner) was added to the cup into which the effect pigment preparation was inputted and mixing was conducted by a spatula. To the stirred mixture, 110 g of clear (manufactured by Nippon Paint Co., Ltd., nax admira 280 adjusting clear) was added and the resultant was agitated by an agitator at a rotation frequency of 500 rpm for 5 minutes. To the agitated mixture, 110 g of the above-mentioned thinner and 10 g of nax multi (10:1) #20 hardener were added and further mixing was conducted by a spatula, thereby preparing testing paint according to each of Examples 1 to 6 and Comparative Example 1.

Next, a steel plate to which a middle coat was applied (the steel plate coated in the order of a base material: iron, an electrodeposited layer: a zinc treatment layer, an intermediate coat layer: a chipping resistant layer, a base coat layer: a base concealing and decorative layer, and a top coat layer: a protective layer of a base coat) was prepared, and onto one surface of the steel plate, the testing paint according to each of the above-described Examples 1 to 6 and Comparative Example 1 was applied by using a spray gun (manufactured by ANEST IWATA, trade name: W-101-134G) such that a dry film thickness was 13 µm to 15 µm and drying was conducted at 80°C for 20 minutes.

A coating surface of the steel plate, to which the testing paint according to each of Examples 1 to 6 and Comparative Example 1 was applied, after drying was visually checked and evaluated. Specifically, a case in which preparing the testing paint was enabled and the formed coating film was flat and smooth and had no color unevenness in brightness or the like was evaluated as "Good" and a case in which preparing the testing paint itself was not enabled and a case in which the coating surface of the steel plate was observed to have bumps and dips or had color unevenness in brightness or the like was evaluated as "Bad".

A blending ratio of the effect pigment (solid content) in the effect pigment preparation and the PAO in each of Examples 1 to 6 and Comparative Example 1 and test results in the above-described Evaluation Test 1 and Evaluation Test 2 conducted as to the effect pigment preparation in each of Examples and Comparative Example are shown in Table 2.

**[Table 2]**

| | Effect pigment | | | PAO | | Evaluation Test 1 | Evaluation Test 2 |
|---|---|---|---|---|---|---|---|
| | Average particle diameter | Solid content blending ratio | Residual solvent content | Liquefaction temperature | Blending ratio | Visual evaluation in molded body state | Visual evaluation in coating film state |
| | (µm) | (% by mass) | (% by mass) | (°C) | (% by mass) | | |
| Example 1 | 11 | 90.3 | 0.1 | - | 9.6 | Good | Good |
| Example 2 | 18 | 94.7 | 0.0 | - | 5.3 | Good | Good |
| Example 3 | 18 | 77.5 | 0.0 | - | 22.5 | Good | Good |
| Example 4 | 18 | 82.1 | 0.0 | - | 17.9 | Good | Good |
| Example 5 | 10 | 86.2 | 0.0 | - | 13.8 | Good | Good |
| Example 6 | 20 | 83.3 | 0.0 | - | | Good | Good |
| Example 7 | 10 | 83.3 | 0.1 | - | 16.6 | Good | Good |
| Comparative Example 1 | 18 | 69.9 | 0.3 | 103 | 29.8 | Good | Bad 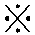 ¹⁾ |

| | | | | | | | |
|---|---|---|---|---|---|---|---|
| 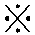 1) The effect pigment preparation itself was not dispersed in the paint and the test paint was not obtained. | | | | | | | |

### < Discussion>

As shown in Table 1, obtainment of the pellet shaped effect pigment preparation was enabled in each of Examples 1 to 7 and Comparative Example 1, whereas obtainment of the pellet shaped effect pigment preparation was not enabled in each of Comparative Example 2 to 4.

Although the detailed reason therefor is not clear, it is considered that in a case of each of Examples 1 to 7, since a PAO content for mutually binding flakes was appropriate, the flakes were mutually bound via the resin and keeping the pellet shape state was enabled. In addition, it is considered that in a case of Comparative Example 1, since the PAO which was solid at room temperature and the flakes were kneaded at the high temperature and the PAO was thereby melted, and in a state in which the flakes were uniformly dispersed in the PAO, the temperature was returned to the room temperature and as a result, the mixture was solidified again, and that mixture was extruded by the disk pelletizer, keeping the pellet shape state was enabled.

On the other hand, it is considered that in a case of Comparative Example 2, since the amount of the PAO for mutually binding the flakes was too small, mutually binding the flakes was not enabled, the powder state resulted. It is considered that in a case of Comparative Example 3, since the amount of the PAO for mutually binding the flakes was excessively large and the PAO at room temperature was in a liquid form, the mixture had fluidity with which the form was unable to be kept. In addition, it is considered that in a case of Comparative Example 4, since the PAO which was solid at room temperature was used, even when the PAO which was solid at room temperature was kneaded with the flakes without heating, the PAO and the flakes were separated, and in that state, extrusion and drying were conducted, the pellet shaped state did not result and the powder state resulted.

As shown in Table 2, the effect pigment preparation in each of Examples 1 to 6 and the effect pigment preparation in Comparative Example 1 had no bumps and dips, scratches, and flaws such as cracks in the molded bodies and had no color unevenness in the brightness or the like in Evaluation Test 1, thus resulting in obtainment of the favorable molded body.

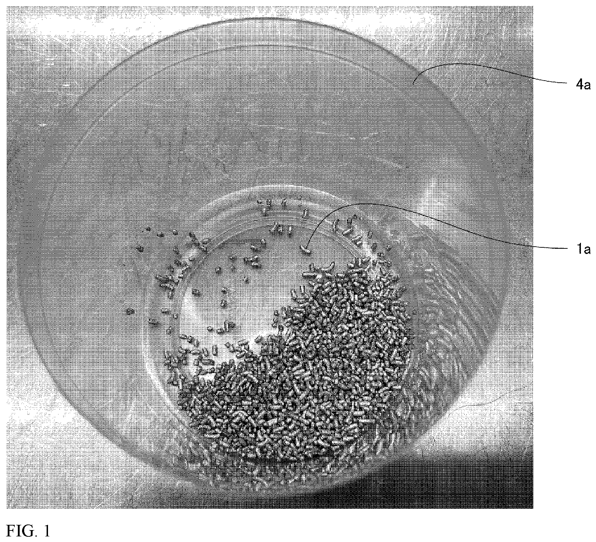

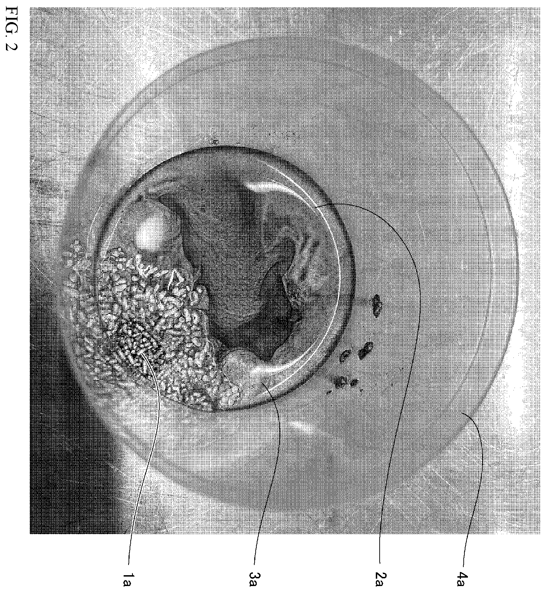

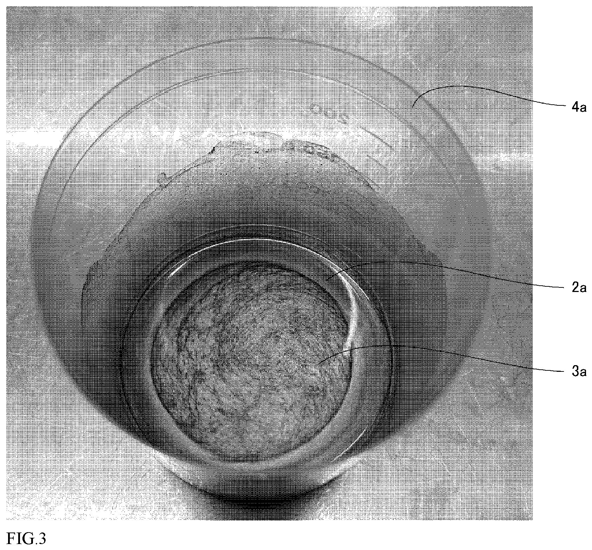

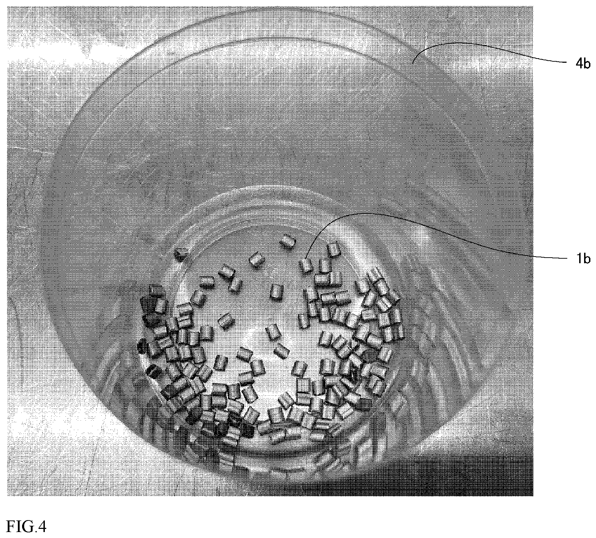

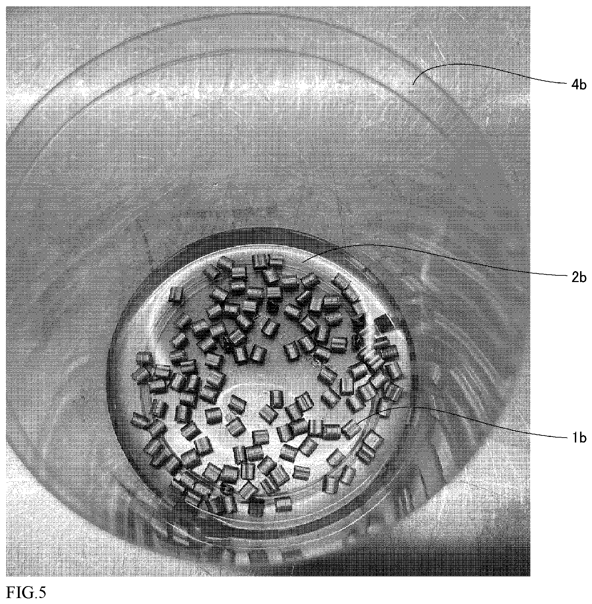

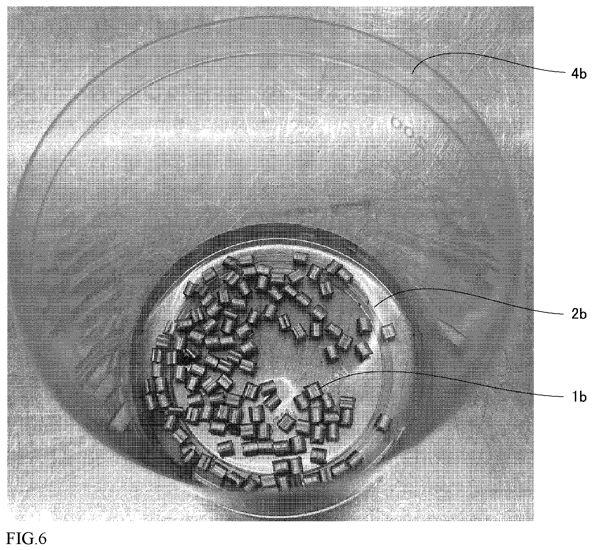

In FIG. 1, a photograph of the effect pigment preparation (in a state of pellets) in Example 1 is shown. In FIG. 2, a photograph of a state of the effect pigment preparation in Example 1 shown in FIG. 1 immediately after the thinner was inputted thereinto. In FIG. 3, a photograph in a state of the mixture in Example 1 shown in FIG. 2 after agitating is shown. On the other hand, in FIG. 4, a photograph of the effect pigment preparation (in a state of pellets) in Comparative Example 1 is shown. In FIG. 5, a photograph in a state of the effect pigment preparation in Comparative Example 1 shown in FIG. 4 immediately after the thinner was inputted thereinto. In FIG. 6, a photograph of the mixture in Comparative Example 1 shown in FIG. 5 after agitating the mixture is shown.

As is understood with reference to FIGS. 1 to 3, the pellet shaped effect pigment preparation (FIG. 1) in Example 1 started dispersion immediately after inputting the thinner (FIG. 2), uniformly dispersed in the thinner after agitating (FIG. 3), and obtainment of the testing paint was enabled. On the other hand, since the pellet shaped effect pigment preparation (FIG. 4) in Comparative Example 1 did not disperse even by inputting the thinner (FIG. 5) and did not disperse in the thinner at all even by agitating (FIG. 6), the testing paint was unable to be obtained.

As described above, in Evaluation Test 2, the effect pigment preparation in each of Examples 1 to 6 easily disperses in the thinner (FIGS. 1 to 3). Therefore, by using the paint of the effect pigment preparation according to each of Examples 1 to 6, the favorable coating film whose coating surface is flat and smooth and which has no color unevenness in brightness or the like can be obtained. On the other hand, as shown in FIGS. 4 to 6, the effect pigment preparation in Comparative Example 1 was unable to disperse in the thinner at all, thus resulting in that the paint coated to the steel plate was not obtained.

Therefore, in comparison between the effect pigment preparation in each of Examples 1 to 6 and the effect pigment preparation in Comparative Example 1, it is found that as conditions to obtain the effect pigment preparation which does not need heating upon mixing the materials, has compatibility with the thermoplastic resin, and exhibits extremely excellent dispersibility when kneaded into the thermoplastic resin composition and used in a solvent-based paint, the effect pigment preparation contains 99% by mass or more of a total of the effect pigment and the PAO, the PAO is in a liquid form at 25°C, and it is preferable that the effect pigment in the effect pigment preparation is 75% by mass or more and 95% by mass or less and it is more preferable that the effect pigment therein is 80% by mass or more and 90% by mass or less, and it is preferable that the PAO is 5% by mass or more and 25% by mass or less and it is more preferable and important that the PAO is 10% by mass or more and 20% by mass or less.

In addition, for example, it is also seen from Table 2 that it is preferable that the kinetic viscosity of the PAO at 40°C is 4000 mm²/s or less and it is more preferable that the kinetic viscosity thereof is 3500 mm²/s or less.

### REFERENCE SIGNS LIST

1a, 1b ··· Effect pigment preparation
2a, 2b ··· Thinner
3a ··· Mixture of effect pigment preparation and thinner
4a, 4b ··· Cup

## Claims

1. An effect pigment preparation containing 99% by mass or more of a total of effect pigment and polyalphaolefin, wherein
the polyalphaolefin is in a liquid form at 25°C, and based on the effect pigment preparation,
the effect pigment is 75% by mass or more and 95% by mass or less,
the polyalphaolefin is 5% by mass or more and 25% by mass or less, and
a volatile organic compound is 1% by mass or less.

2. The effect pigment preparation according to claim 1, wherein a kinetic viscosity of the polyalphaolefin at 40°C is 4000 mm²/s or less.

3. The effect pigment preparation according to claim 1, wherein the effect pigment is metal, a metal oxide, a metal hydroxide, or a mixture of any two or three of the metal, the metal oxide, and the metal hydroxide.

4. The effect pigment preparation according to claim 1, wherein the effect pigment is coated with resin, a metal oxide, a metal hydroxide, or a mixture of any two or three of the resin, the metal oxide, and the hydroxide.

5. The effect pigment preparation according to claim 1, wherein a surface of the effect pigment has a chromatic color pigment layer.

6. The effect pigment preparation according to claim 5, wherein the chromatic color pigment layer contains resin, a metal oxide, a metal hydroxide, or a mixture of any two or three of the resin, the metal oxide, and the metal hydroxide.

7. A thermoplastic resin composition including the effect pigment preparation according to any one of claims 1 to 6 and thermoplastic resin.

8. A method for manufacturing paint or ink including the effect pigment preparation according to any one of claims 1 to 6.
